# EUROPEAN PATENT SPECIFICATION

(11) **EP 2 272 326 B1**
(45) Date of publication and mention of the grant of the patent: **29.08.2018**
(21) Application number: 10168791.1
(22) Date of filing: 07.07.2010
(51) Int. Cl.: A01G 31/00

(54) **Plant growing device**
Pflanzenzuchtvorrichtung
Dispositif de croissance de plantes

(30) Priority: 08.07.2009 TW 098123058
(43) Date of publication of application: 12.01.2011
(73) Proprietor: Huang, Chen-Cheng, Taipei City (TW); Huang, Pao-Hao, Taipei City (TW); Huang, Pao-Han, Taipei City (TW)
(72) Inventor: Huang, Chen-Cheng, Taipei City (TW); Huang, Pao-Hao, Taipei City (TW); Huang, Pao-Han, Taipei City (TW)
(74) Representative: D Young & Co LLP

(56) References cited:
- EP-A1- 0 369 771
- WO-A1-84/02827
- WO-A1-94/22287
- DE-A1- 19 848 921
- FR-A1- 2 879 892
- NL-C2- 1 002 716

## Description

This application claims priority of Taiwanese application no. 098123058, filed on July 8, 2009.

This invention relates to a growing device, more particularly to a plant growing device.

When a plant is grown, many factors, such as a growing medium (e.g., soil, wood chip, etc.), an extrinsic element (e.g., light, water, temperature, fertilizer, etc.), and an intrinsic property of the plant, may influence growth of the plant. Several of the aforementioned factors must be particularly taken into account so as to successfully grow the plant.

Since cell division, cell growth, and cell differentiation only can proceed when water in plant cells is in a saturation state, water supply is essential for growth of a plant. Consequently, when water supply is insufficient, a plant may stop growing. Furthermore, deficiency of water may adversely affect respiration and photosynthesis.

Light is also important for a plant. A plant requires sufficient light to synthesize adequate photosynthetic products so that the same is able to grow. Moreover, irradiation by light is necessary for plant germination, development of leaves, etc. When plants to be cultivated are not sufficiently spaced apart, the plants may have difficulty in receiving light during cultivation such that growth of the plants is negatively influenced.

Fertilizer affects growth of a plant as well. Generally, fertilizer is able to supply nutrients to a plant. Suitability of fertilizer in a growing medium to a plant and distribution of the fertilizer in the growing medium must be considered so as to grow a plant. A conventional way to use fertilizer is to dispose the fertilizer on an outer layer of soil in which a plant is grown. However, the fertilizer may be unable to effectively penetrate the soil such that the plant is incapable of sufficiently absorbing the fertilizer.

In addition, pests and viruses have to be prevented.

WO-94/22287-A1 discloses a cultivation substrate having the features of the pre-characterizing portion of claim 1.

The object of the present invention is to provide a plant growing device that is suitable for growth of a plant.

According to this invention, a plant growing device includes an envelope and a plant growing medium. The envelope is made of a sheet material and has substantially planar first and second walls, a surrounding wall connected between the first and second walls, and a plurality of openings formed in the second wall and adapted to permit extension of plants. The plant growing medium is enclosed by the envelope, and includes a water-absorptive material selected from the group consisting of a polymeric foam, saw dust, charcoal, soil, sand, wood pulp, polymeric fibrous substances, and natural fiber materials. The envelope further includes a plurality of flow guide channels that are formed in the second wall and that are in spatial communication with the openings.

Other features and advantages of the present invention will become apparent in the following detailed description of the preferred embodiments of this invention, with reference to the accompanying drawings, in which:
FIG. 1 is a fragmentary perspective view illustrating the first reference example of a plant growing device useful for understanding this invention with seeds disposed therein;
FIG. 2 is a schematic fragmentary partly sectional view of the first reference example having the seeds disposed therein;
FIG. 3 is a schematic fragmentary partly sectional view to illustrate the first reference example in a state of use;
FIG. 4 is a magnified view of a portion of FIG. 3;
FIG. 5 is a schematic fragmentary view illustrating the first preferred embodiment of a plant growing device according to this invention with seeds disposed therein;
FIG. 6 is a fragmentary perspective view illustrating the second preferred embodiment of a plant growing device according to this invention with seeds disposed therein;
FIG. 7 is a schematic fragmentary partly sectional view to illustrate the second reference example of a plant growing device in a state of use useful for understanding this invention; and
FIG. 8 is a schematic fragmentary view illustrating how a liquid can be directed by first and second flow diverting partitions of the second reference example.

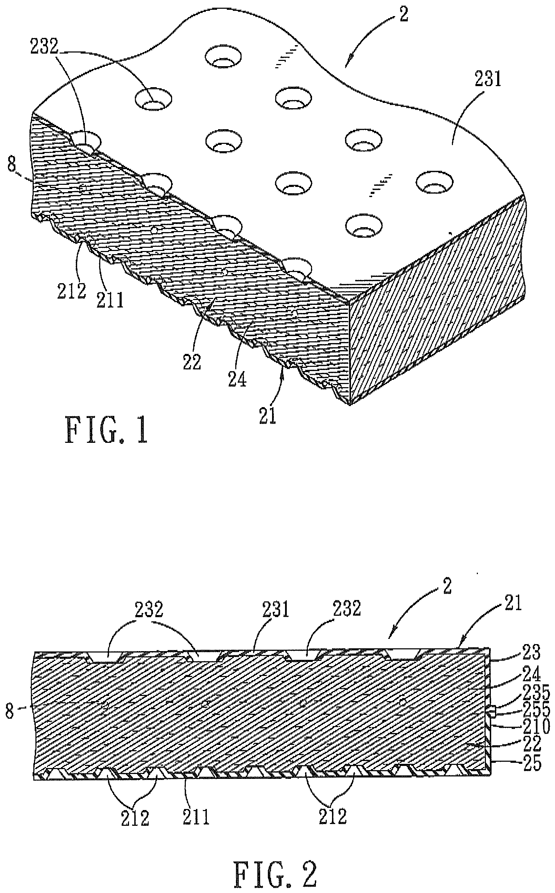

Referring to FIGS. 1 and 2, the first reference example of a plant growing device 2 useful for understanding the present invention is adapted to cultivate a plant. The plant growing device 2 includes an envelope 21 and a plant growing medium 22.

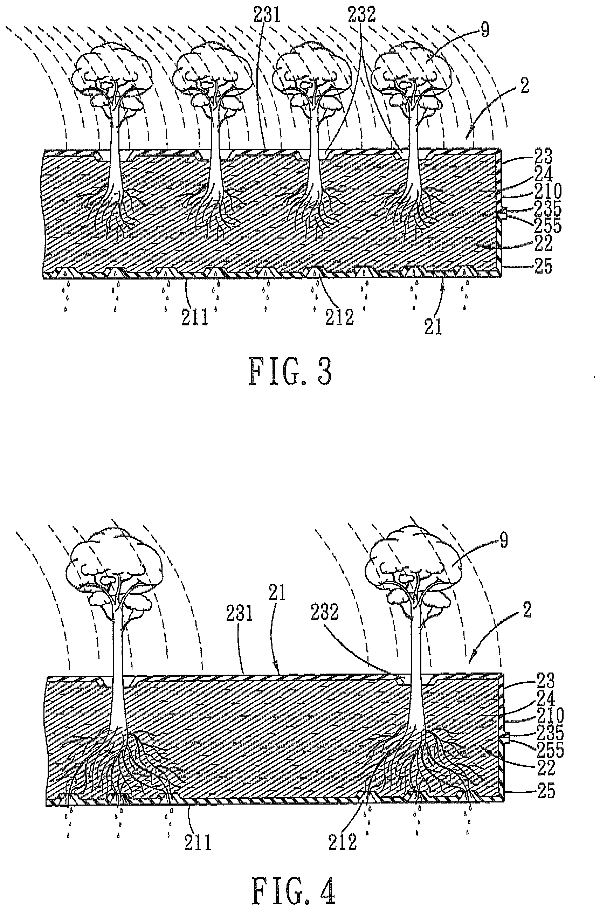

The envelope 21 is made of a sheet material and has substantially planar first and second walls 211,231, a surrounding wall 210 that is connected between the first and second walls 211,231, and a plurality of openings 232 that are formed in the second wall 231 and that are adapted to permit extension of plants 9 (see FIGS. 3 and 4). In this embodiment, the envelope 21 is composed of first and second envelope halves 25,23 that respectively have a substantially tray-like shape. The first envelope half 25 has the first wall 211 and a first portion of the surrounding wall 210. The second envelope half 23 has the second wall 231 and a remaining second portion of the surrounding wall 210. The first and remaining second portions of the surrounding wall 210 have peripheral ends 255,235 that are bonded to each other by a high-frequency heat sealing process.

The sheet material may be liquid permeable non-woven fabric, a polymer, or a degradable plastic such as a photodegradable plastic, a disintegrable plastic, and a biologically degradable plastic. In this embodiment, the sheet material is degradable polyethylene or polypropylene, thereby being environmentally friendly. The envelope 21 in this embodiment further has a plurality of drain holes 212 formed in the first wall 211.

Each of the openings 232 is tapered from an outer surface of the second wall 231 to an inner surface of the second wall 231. An opening-defining wall of each of the openings 232 has a shape of a truncated cone. Each of the drain holes 212 is tapered from an outer surface of the first wall 211 to an inner surface of the first wall 211. A drain-hole defining wall of each of the drain holes 212 has a shape of a truncated cone. The first and second walls 211,231 may be perforated using a water perforation process, a mechanical perforation process, or a vacuum perforation process such that the openings 232 and the drain holes 212 can be formed.

Size of the openings 232 and distances between the openings 232 may be designed for the plants 9 such that the plants 9 are able to extend through the respective openings 232 when growing, and such that the plants 9 have enough space for growth after the same extend through the respective openings 232 (see FIGS. 3 and 4). Namely, the plants 9 extending through the respective openings 232 do not interfere with each other and are hence able to receive light.

The plant growing medium 22 is enclosed by the envelope 21, and includes a water-absorptive material that is selected from the group consisting of a polymeric foam, saw dust, charcoal, soil, sand, wood pulp, polymeric fibrous substances, and natural fiber materials. Seeds 8 are disposed in the plant growing medium 22. In this reference example, the seeds 8 are mixed with the plant growing medium 22 during production of the plant growing device 2.

The plant growing medium 22 contains a nutrient 24 adapted to nourish the seeds 8 (i.e., the plants 9). The nutrient 24 may be an organic fertilizer, a chemical fertilizer, or a microbial fertilizer. Preferably, the nutrient 24 is predetermined so as to be optimal for the seeds 8 (i.e., the plants 9) and the plant growing medium 22. The nutrient 24 is uniformly mixed with the plant growing medium 22 such that the seeds 8 (i.e., the plants 9) are able to sufficiently absorb the nutrient 24.

Referring to FIG. 3, when water is supplied to the plant growing device 2, the plant growing medium 22 is able to rapidly absorb water. Therefore, the plants 9 cultivated in the plant growing medium 22 can easily absorb water. After the plant growing medium 22 is saturated with water, excess water can be released via the drain holes 212 and can be prevented from staying in the plant growing medium 22. Consequently, stems and roots of the plants 9 are prevented from rotting.

Since the envelope 21 in this embodiment is made from polyethylene or polypropylene, the second wall 231 covering the plant growing medium 22 is able to prevent water in the plant growing medium 22 from easily evaporating. Thus, water can be conserved in the plant growing medium 22. Furthermore, humidity and a temperature of the plant growing medium 22 can be maintained. The plant growing device 2 is hence suitable for a dry environment. The envelope 21 is also capable of prohibiting pests and viruses from easily reaching the plant growing medium 22, thereby being able to protect the plants 9 cultivated in the plant growing medium 22.

When the plants 9 cultivated in the plant growing device 2 are required to be moved to a desired location, the plant growing device 2, which has the plants 9 cultivated therein, may be directly moved to the desired location since the envelope 21 securely encloses the plant growing medium 22. Consequently, the plants 9 are not necessary to be removed from the plant growing medium 22 for relocating.

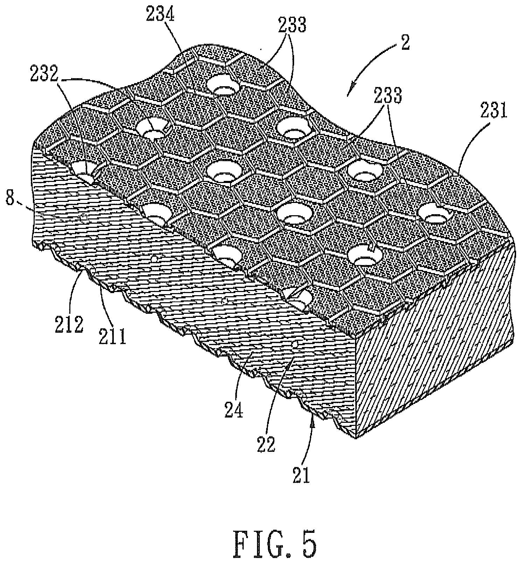

Referring to FIG. 5, the first preferred embodiment of the plant growing device 2 according to the present invention is similar to the first reference example except that the envelope 21 further includes a plurality of micro-holes 233 extending through the second wall 231 and a plurality of flow guide channels 234 formed in the second wall 231. The flow guide channels 234 are in spatial communication with the openings 232, and are able to rapidly and evenly dispense water to the openings 232. By virtue of the additional micro-holes 233 and the flow guide channels 234, water can be quickly and uniformly directed into the plant growing medium 22.

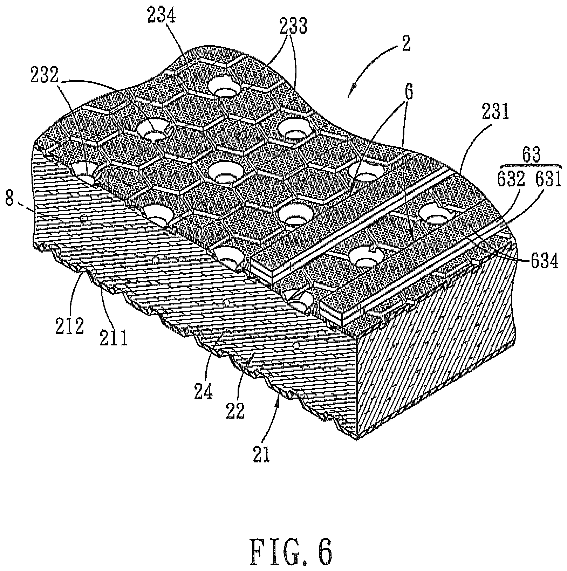

Referring to FIG. 6, the second preferred embodiment of the plant growing device 2 according to the present invention is similar to the first preferred embodiment except that the second preferred embodiment of the plant growing device 2 further includes a plurality of nutrient supplements 6.

The nutrient supplements 6 are disposed on regions of an outer surface of the second wall 231, which do not cover the openings 232. Each of the nutrient supplements 6 includes a liquid permeable nutrient retainer 63 that is removably attached to the second wall 231, and a nutrient (not shown) that is held by the nutrient retainer 63 and that is adapted to nourish the seeds 8 (i.e., the plants 9). The nutrient retainer 63 includes first and second liquid permeable layers 631,632 that sandwiches the nutrient. The first liquid permeable layer 631 is removably attached to the second wall 231. First through-holes (not shown) are formed in the first liquid permeable layer 631, and second through-holes 634 are formed in the second liquid permeable layer 632. In this embodiment, the nutrient in the nutrient retainer 63 is water-soluble.

When water is supplied to the plant growing device 2, a portion of the water flows into the nutrient retainer 63 via the second through-holes 634 of the second liquid permeable layer 632 and subsequently flows out of the nutrient retainer 63 via the first through-holes of the first liquid permeable layer 631. The portion of the water, which flows into and out of the nutrient retainer 63, is able to carry a portion of the nutrient in the nutrient retainer 63 into the plant growing medium 22 through the micro-holes 233 and the flow guide channels 234. Thus, additional nutrition can be supplied to the plant growing medium 22. When one of the nutrient supplements 6 has insufficient nutrient therein, the same can be removed from the second wall 231 and replaced by a new nutrient supplement 6. As a result, the plant growing device 2 can be supplemented with unlimited nutrients.

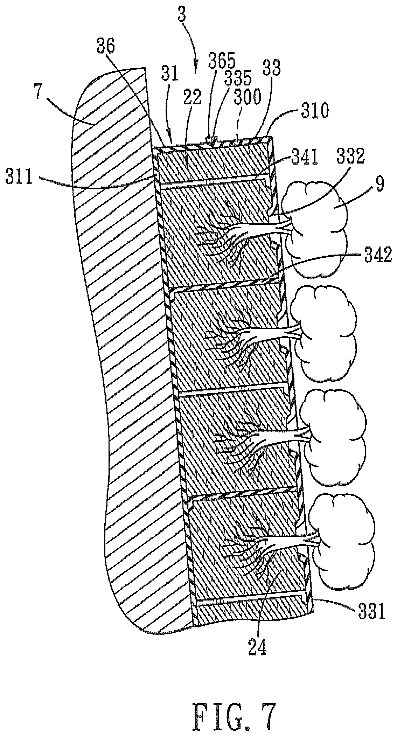

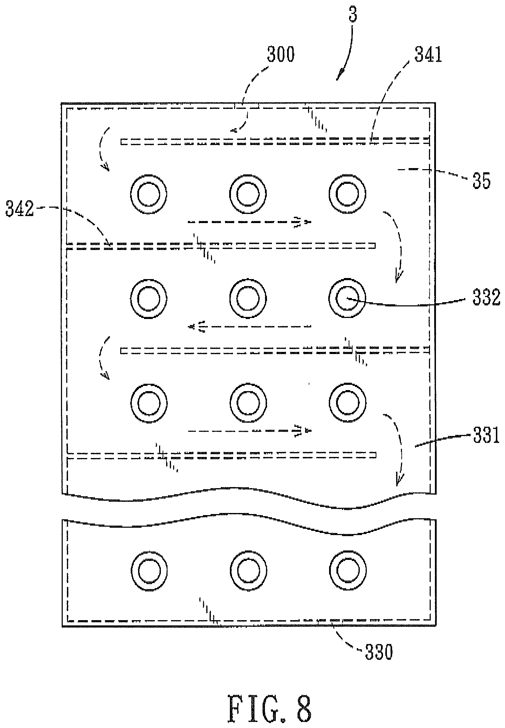

FIGS. 7 and 8 show the second reference example of the plant growing device 3 useful for understanding the present invention. The second reference example is similar to the first reference example except for the following four differences. First, a drain hole 330 of the second reference example is formed in the surrounding wall 310 instead of the first wall 311. Secondly, the envelope 31 of the second reference example further includes a liquid entrance hole 300 extending through the surrounding wall 310. Specifically, the liquid entrance hole 300 and the drain hole 330 are formed on opposite first and second sides of the surrounding wall 310. Thirdly, the plant growing device 3 of the second reference example further includes a plurality of first and second flow diverting partitions 341,342 that are disposed within the envelope 31 in an alternating manner and in a direction transverse to the first and second walls 311,331. Each of the first flow diverting partitions 341 is connected to the first and second walls 311,331, and a third side of the surrounding wall 310. Each of the second flow diverting partitions 342 is connected to the first and second walls 311,331, and a fourth side of the surrounding wall 310 opposite to the third side. Fourthly, the plant growing device 3 of the second reference example is designed to be disposed vertically or obliquely by fixing the first wall 311 to a desired structure 7 (e.g., a wall).

The first and second flow diverting partitions 341,342 divide an interior space of the envelope 31 into a plurality of rooms that are intercommunicated to form a multi-turn flow passage 35. When water flows into the plant growing medium 22 through the liquid entrance hole 300, water flows along the multi-turn flow passage 35 and is able reach each portion of the plant growing medium 22. Accordingly, each portion of the plant growing medium 22 is capable of sufficiently absorbing water. Excess water can be drained by virtue of the drain hole 330 in the surrounding wall 310. While the first and second flow diverting partitions 341, 342 are configured as partition plates in this reference example, they should not be limited only thereto. The first and second flow diverting partitions 341, 342 may also be configured as heat sealed seams that are formed by thermal bonding the second wall 331 to the first wall 311 through a high frequency heat sealing process and that divide the interior of the envelope 31 to form the multi-turn flow passage 35.

## Claims

1. A plant growing device (2,3) comprising:
an envelope (21,31) made of a sheet material and having substantially planar first and second walls (211,311,231,331), a surrounding wall (210,310) connected between said first and second walls (211,311,231,331), and a plurality of openings (232,332) formed in said second wall (231,331) and adapted to permit extension of plants (9); and
a plant growing medium (22) enclosed by said envelope (21,31), and including a water-absorptive material selected from the group consisting of a polymeric foam, saw dust, charcoal, soil, sand, wood pulp, polymeric fibrous substances, and natural fiber materials;
**characterized in that** said envelope (21) further includes a plurality of flow guide channels (234) that are formed in said second wall (231) and that are in spatial communication with said openings (232).

2. The plant growing device (2) as claimed in claim 1, **characterized in that** said envelope (21) further has a plurality of drain holes (212) formed in said first wall (211).

3. The plant growing device (2,3) as claimed in claim 1, **characterized in that** said sheet material is liquid impermeable.

4. The plant growing device (2) as claimed in claim 1, **characterized in that** said sheet material is a liquid permeable non-woven fabric.

5. The plant growing device (2,3) as claimed in claim 1, **characterized in that** said sheet material is a degradable plastic.

6. The plant growing device (2,3) as claimed in claim 1, **characterized in that** said plant growing medium (22) contains a nutrient (24) selected from the group consisting of an organic fertilizer, a chemical fertilizer, and a microbial fertilizer.

7. The plant growing device (2,3) as claimed in claim 1, **characterized in that** each of said openings (232,332) is tapered from an outer surface of said second wall (231,331) to an inner surface of said second wall (231,331).

8. The plant growing device (2) as claimed in claim 2, **characterized in that** each of said drain holes (212) is tapered from an outer surface of said first wall (211) to an inner surface of said first wall (211).

9. The plant growing device (2) as claimed in Claim 1, **characterized in that** said envelope (21) further includes a plurality of micro-holes (233) extending through said second wall (231).

10. The plant growing device (2) as claimed in claim 1, further **characterized by** a nutrient supplement (6) that is disposed on regions of an outer surface of said second wall (231) which do not cover said openings (232), said nutrient supplement (6) including a liquid permeable nutrient retainer (63) attached to said second wall (231), and a nutrient held by said nutrient retainer (63).

11. The plant growing device (2) as claimed in claim 10, **characterized in that** said nutrient retainer (63) includes two liquid permeable layers (631,632) sandwiching said nutrient.

12. The plant growing device (3) as claimed in claim 1, **characterized in that** said envelope (31) further includes a liquid entrance hole (300) that extends through a first side of said surrounding wall (310), and a drain hole (330) that extends through a second side of said surrounding wall (310) opposite to said first side.

13. The plant growing device (3) as claimed in claim 12, further **characterized by** a plurality of first and second flow diverting partitions (341,342) that are disposed within said envelope (31) in an alternating manner and in a direction transverse to said first and second walls (311,331), said first and second flow diverting partitions (341,342) dividing an interior space of said envelope (31) into a plurality of rooms that are intercommunicated to form a multi-turn flow passage (35) .

14. The plant growing device (2,3) as claimed in claim 1, **characterized in that** said envelope (21,31) is composed of first and second envelope halves (25,36,23,33), said first envelope half (25,36) having said first wall (211,311) and a first portion of said surrounding wall (210,310), said second envelope half (23,33) having said second wall (231,331) and a remaining second portion of said surrounding wall (210,310), said first and remaining second portions of said surrounding wall (210,310) having peripheral ends (255,365,235,335) that are bonded to each other.

## Patentansprüche

1. Pflanzenzuchtvorrichtung (2, 3), umfassend:
eine Hülle (21, 31), die aus einem Lagenmaterial hergestellt ist und im Wesentlichen planare erste und zweite Wände (211, 311, 231, 331), eine umgebende Wand (210, 310), die die Verbindung zwischen den ersten und zweiten Wänden (211, 311, 231, 331) bildet, und eine Vielzahl von Öffnungen (232, 332) aufweist, die in der zweiten Wand (231, 331) gebildet sind und vorgesehen sind, um Vergrößerung der Pflanzen (9) zuzulassen; und
ein Pflanzenzuchtmedium (22), das von der Hülle (21, 31) umschlossen ist und ein wasserabsorbierendes Material ausgewählt aus der Gruppe bestehend aus polymerem Schaum, Sägespänen, Holzkohle, Erdreich, Sand, Holzschliff, polymeren faserigen Substanzen und Naturfasermaterialien einschließt;
**dadurch gekennzeichnet, dass** die Hülle (21) ferner eine Vielzahl von Flussführungskanälen (234) einschließt, die in der zweiten Wand (231) gebildet sind, und dass sie in räumlicher Kommunikation mit den Öffnungen (232) sind.

2. Pflanzenzuchtvorrichtung (2) nach Anspruch 1, **dadurch gekennzeichnet, dass** die Hülle (21) ferner eine Vielzahl von Drainagelöchern (212) aufweist, die in der ersten Wand (211) gebildet sind.

3. Pflanzenzuchtvorrichtung (2, 3) nach Anspruch 1, **dadurch gekennzeichnet, dass** das Lagenmaterial flüssigkeitsundurchlässig ist.

4. Pflanzenzuchtvorrichtung (2) nach Anspruch 1, **dadurch gekennzeichnet, dass** das Lagenmaterial ein flüssigkeitsdurchlässiges Vliestextil ist.

5. Pflanzenzuchtvorrichtung (2, 3) nach Anspruch 1, **dadurch gekennzeichnet, dass** das Lagenmaterial ein abbaubarer Kunststoff ist.

6. Pflanzenzuchtvorrichtung (2, 3) nach Anspruch 1, **dadurch gekennzeichnet, dass** das Pflanzenzuchtmedium (22) einen Nährstoff (24) ausgewählt aus der Gruppe bestehend aus organischem Dünger, chemischem Dünger und mikrobiellem Dünger enthält.

7. Pflanzenzuchtvorrichtung (2, 3) nach Anspruch 1, **dadurch gekennzeichnet, dass** jede der Öffnungen (232, 332) sich von einer Außenfläche der zweiten Wand (231, 331) zu einer Innenfläche der zweiten Wand (231, 331) verjüngt.

8. Pflanzenzuchtvorrichtung (2) nach Anspruch 2, **dadurch gekennzeichnet, dass** jedes der Drainagelöcher (212) sich von einer Außenfläche der ersten Wand (211) zu einer Innenfläche der ersten Wand (211) verjüngt.

9. Pflanzenzuchtvorrichtung (2) nach Anspruch 1, **dadurch gekennzeichnet, dass** die Hülle (21) ferner eine Vielzahl von Mikrolöchern (233) einschließt, die sich durch die zweite Wand (231) hindurch erstrecken.

10. Pflanzenzuchtvorrichtung (2) nach Anspruch 1, ferner **gekennzeichnet durch** eine Nährstoffergänzung (6), die auf Regionen einer Außenfläche der zweiten Wand (231) angeordnet ist, die die Öffnungen (232) nicht bedecken, wobei die Nährstoffergänzung (6) einen flüssigkeitsdurchlässigen Nährstoffhalter (63), der an der zweiten Wand (231) befestigt ist, und einen Nährstoff einschließt, der von dem Nährstoffhalter (63) gehalten wird.

11. Pflanzenzuchtvorrichtung (2) nach Anspruch 10, **dadurch gekennzeichnet, dass** der Nährstoffhalter (63) zwei flüssigkeitsdurchlässige Schichten (631, 632) einschließt, die den Nährstoff sandwichartig umschließen.

12. Pflanzenzuchtvorrichtung (3) nach Anspruch 1, **dadurch gekennzeichnet, dass** die Hülle (31) ferner ein Flüssigkeitseintrittsloch (300), das sich durch eine erste Seite der umgebenden Wand (310) erstreckt, und ein Drainageloch (330) einschließt, das sich durch eine zweite Seite der umgebenden Wand (310) gegenüber der ersten Seite erstreckt.

13. Pflanzenzuchtvorrichtung (3) nach Anspruch 12, ferner **gekennzeichnet durch** eine Vielzahl von ersten und zweiten flussumlenkenden Trennwänden (341, 342), die innerhalb der Hülle (31) in alternierender Weise und in einer Richtung quer zu den ersten und zweiten Wänden (311, 331) angeordnet sind, wobei die ersten und zweiten flussumlenkenden Trennwände (341, 342) einen Innenraum der Hülle (31) in eine Vielzahl von Räumen teilen, die in gegenseitiger Verbindung stehen, um einen Flussdurchgang (35) zu bilden, der mehrfach seine Richtung ändert.

14. Pflanzenzuchtvorrichtung (2, 3) nach Anspruch 1, **dadurch gekennzeichnet, dass** die Hülle (21, 31) aus ersten und zweiten Hüllenhälften (25, 36, 23, 33) zusammengesetzt ist, wobei die erste Hüllenhälfte (25, 36) die erste Wand (211, 311) und einen ersten Abschnitt der umgebenden Wand (210, 310) aufweist, die zweite Hüllenhälfte (23, 33) die zweite Wand (231, 331) und einen verbleibenden zweiten Abschnitt der umgebenden Wand (210, 310) aufweist, wobei der erste und der verbleibende zweite Abschnitt der umgebenden Wand (210, 310) periphere Enden (255, 365, 235, 335) aufweisen, die miteinander verbunden sind.

## Revendications

1. Dispositif de croissance de plantes (2, 3) comprenant :
une enveloppe (21, 31) composée d'un matériau en feuille et ayant des première et seconde parois sensiblement planes (211, 311, 231, 331), d'une paroi environnante (210, 310) raccordée entre lesdites première et seconde parois (211, 311, 231, 331) et d'une pluralité d'ouvertures (232, 332) formées dans ladite seconde paroi (231, 331) et conçues pour permettre le développement de plantes (9) ; et
un milieu de croissance de plantes (22) entouré par ladite enveloppe (21, 31), et comprenant un matériau absorbant l'eau sélectionné dans le groupe constitué par une mousse polymère, de la sciure, du charbon de bois, de la terre, du sable, de la pâte de bois, des substances fibreuses polymères et des matériaux de fibres naturelles ;
**caractérisé en ce que** ladite enveloppe (21) comprend en outre une pluralité de canaux de guidage d'écoulement (234) qui sont formés dans ladite seconde paroi (231) et qui sont en communication spatiale avec lesdites ouvertures (232).

2. Dispositif de croissance de plantes (2) selon la revendication 1, **caractérisé en ce que** ladite enveloppe (21) comporte en outre une pluralité de trous de drainage (212) formés dans ladite première paroi (211).

3. Dispositif de croissance de plantes (2, 3) selon la revendication 1, **caractérisé en ce que** ledit matériau en feuille est imperméable aux liquides.

4. Dispositif de croissance de plantes (2) selon la revendication 1, **caractérisé en ce que** ledit matériau en feuille est un tissu non tissé perméable aux liquides.

5. Dispositif de croissance de plantes (2, 3) selon la revendication 1, **caractérisé en ce que** ledit matériau en feuille est un plastique biodégradable.

6. Dispositif de croissance de plantes (2, 3) selon la revendication 1, **caractérisé en ce que** ledit milieu de croissance de plantes (22) contient une substance nutritive (24) sélectionnée dans le groupe constitué par un engrais organique, un engrais chimique et un engrais microbien.

7. Dispositif de croissance de plantes (2, 3) selon la revendication 1, **caractérisé en ce que** chacune desdites ouvertures (232, 332) est effilée depuis une surface externe de ladite seconde paroi (231, 331) jusqu'à une surface interne de ladite seconde paroi (231, 331).

8. Dispositif de croissance de plantes (2) selon la revendication 2, **caractérisé en ce que** chacun des trous de drainage (212) est effilé depuis une surface externe de ladite première paroi (211) jusqu'à une surface interne de ladite première paroi (211).

9. Dispositif de croissance de plantes (2) selon la revendication 1, **caractérisé en ce que** ladite enveloppe (21) comprend en outre une pluralité de micro-trous (233) s'étendant à travers ladite seconde paroi (231).

10. Dispositif de croissance de plantes (2) selon la revendication 1, **caractérisé en outre par** un supplément nutritif (6) qui est disposé sur des régions d'une surface externe de ladite seconde paroi (231) qui ne recouvrent pas lesdites ouvertures (232), ledit supplément nutritif (6) comprenant un dispositif de retenue de nutriment perméable aux liquides (63) fixé à ladite seconde paroi (231), et un nutriment conservé par ledit dispositif de retenue de nutriment (63).

11. Dispositif de croissance de plantes (2) selon la revendication 10, **caractérisé en ce que** ledit dispositif de retenue de nutriment (63) comprend deux couches perméables aux liquides (631, 632) prenant en sandwich ledit nutriment.

12. Dispositif de croissance de plantes (3) selon la revendication 1, **caractérisé en ce que** ladite enveloppe (31) comprend en outre un trou d'entrée de liquide (300) qui s'étend à travers un premier côté de ladite paroi environnante (310), et un trou de drainage (330) qui s'étend à travers un second côté de ladite paroi environnante (310) opposé audit premier côté.

13. Dispositif de croissance de plantes (3) selon la revendication 12, **caractérisé en outre par** une pluralité de première et secondes cloisons de déviation de l'écoulement (341, 342) qui sont disposées à l'intérieur de ladite enveloppe (31) de manière alternée et dans une direction transversale auxdites première et seconde parois (311, 331), lesdites première et secondes cloisons de déviation de l'écoulement (341, 342) divisant un espace intérieur de ladite enveloppe (31) en une pluralité de chambres qui communiquent entre elles pour former un passage d'écoulement à plusieurs tours (35).

14. Dispositif de croissance de plantes (2, 3) selon la revendication 1, **caractérisé en ce que** ladite enveloppe (21, 31) est composée de première et seconde demi-enveloppes (25, 36, 23, 33), ladite première demi-enveloppe (25, 36) ayant ladite première paroi (211, 311) et une première partie de ladite paroi environnante (210, 310), ladite seconde demi-enveloppe (23, 33) ayant ladite seconde paroi (231, 331) et une seconde partie restante de ladite paroi environnante (210, 310), ladite première partie et ladite seconde partie restante de ladite paroi environnante (210, 310) ayant des extrémités périphériques (255, 365, 235, 335) qui sont reliées les unes aux autres.
